# EUROPEAN PATENT APPLICATION

(11) **EP 4 342 566 A1**
(43) Date of publication of application: **27.03.2024**
(21) Application number: 22196499.2
(22) Date of filing: 20.09.2022
(51) Int. Cl.: B01D 46/24, B01D 46/64, H01M 8/0662

(54) **GAS FILTER SYSTEM**

(71) Applicant: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71691 Freiberg (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(57) **Abstract**

The invention refers to a Gas filter system (10) comprising
- a housing (12) with a sealing projection (52) and a housing groove (50);
- an outer filter element (20) having a first filter medium (22) and a first end cap (24); and
- an inner filter element (30) having a second filter medium (32) and a third end cap (34);
wherein the first end cap (24) has a first axial end cap projection (42) and the third end cap (34) has a second axial end cap projection (44), both end cap projections (42, 44) being arranged in the housing groove (50);
said first and second end cap projections (42, 44) forming a common groove (46) into which the sealing projection (52) protrudes for sealing abutment against the first and third end cap (24, 34) at the common groove (46). The invention also relates to the use of an outer filter element (20) and/or an inner filter element (30) in such a gas filter system (10).

## Description

### Technical field

The present invention refers to a gas filter system comprising an inner filter element, an outer filter element surrounding the inner filter element and a housing for sealing abutment against the outer and the inner filter element.

### Background

In some applications, it is required to filter a gas flow with two filter elements. Typically, the gas flows through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells. For such an application typically one filter element is adapted to filter particles and the other filter element is adapted to adsorb or absorb harmful gases.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has an open end cap and the second (inner) filter element has a closed end cap. The closed end cap of the inner filter element is arranged to close the opening in the end cap of the outer filter element at the second axial end.

US 5,415,677 A discloses a gas filter system having a first (outer) filter element and a second (inner) filter element disposed within a housing. The filter elements comprise end caps, which are separated by a projection of the housing.

It is an object of the invention to provide a gas filter system with improved sealing between a housing and two filter elements suitable for joint use.

This is achieved by a gas filter system according to claim 1,use of filter elements according to claim 15 and filter elements according to claims 16 and 18. Advantageous embodiments are given in the subclaims and the description.

### Disclosure of the invention

In accordance with the invention, a gas filter system is provided. The gas filter system comprises a housing with a sealing projection and a housing groove. Said sealing projection is arranged within said housing groove.

Furthermore, the gas filter system comprises an outer filter element and an inner filter element. The outer filter element has a first filter medium arranged between a first end cap and a second end cap. The inner filter element has a second filter medium arranged between a third end cap and a fourth end cap. The first and the third end caps are open. Preferably, the first and second end caps have a central opening. This allows the inner filter element to be placed inside the outer filter element. On the other hand, (filtered) air can flow out through the third end cap.

The first filter medium is arrangeable to surround the second filter medium, such that the first end cap of the outer filter element surrounds the third end cap of the inner filter element. In other words, the first end cap and the third end cap at least partially overlap in an axial direction of the gas filter system. The filter elements are hollow bodies. The filter media may be arranged to form a hollow-cylindrical or hollow-conical body and may preferably be circular or oval in cross section. The filter media each surround a longitudinal axis. In particular, the filter media may be arranged concentric to a common longitudinal axis. Indications of directions such as radial or axial refer to the longitudinal axis. In principle, the first and third end caps are associated with a first axial end; the second and fourth end caps are associated with a second axial end. The longitudinal axis of the inner filter element and the outer filter may also be inclined relative to one another. For example, the outer filter element may be hollow-cylindrical and have its longitudinal axis in common with the filter housing, and the inner filter element may be hollow-conical wherein the fourth end cap opposing the open first and third end caps may be smaller in diameter as the third end cap and may be arranged to have its center laterally displaced relative to a center of the outer filter element or the filter housing.

Moreover, the first end cap has a first axial end cap projection and the third end cap has a second axial end cap projection. In other words, both the first end cap and the third end cap each have a projection that protrudes axially beyond the first or second filter media, respectively.

The first end cap projection and the second end cap projection are arranged within the housing groove. Said end cap projections can sealingly engage the housing.

The first and the second end cap projections form a common groove into which the sealing projection protrudes for sealing abutment against the first and third end cap at the common groove. In other words, the first and second end cap projections are each sealingly received in a respective sub-groove of the housing groove, the sub-grooves of the housing groove being delimited by the sealing projection. Preferably, the sealing projection sealingly abuts the first and second end cap projections within the common groove. Each end cap projection preferably forms one side of the common groove. Particularly preferably, each projection forms one half of the common groove. Especially, the first and second end cap projections are arranged on the same axial height along the longitudinal axis.

During use of the gas filter system, a gas flow is typically first directed through the first filter medium of the outer filter element and then through the second filter medium of the inner filter element. The gas flows form radially outside to radially inside and the clean gas exits the filter system via the preferably central opening of the third end cap of the inner filter element in axial direction.

According to the invention, when the outer filter element is arranged around the inner filter element for use of the gas filter system, the first end cap of the outer filter element surrounds the third end cap of the inner filter element. In other words, the first and third end caps at least partially overlap each other in axial direction. In a preferred embodiment, the first and third end caps are arranged on the same axial height along the longitudinal axis. In this mounted state, the first and third end caps are sealed against the housing, preferably in the radial direction by the sealing projection. Thus, the inner and outer filter elements are indirectly sealed against each other at the first axial end. By sealing of the first and third end caps against the housing, an intermediate space between the first and second filter media is sealed at the first end. Therefore, gas to be filtered must flow through the two filter media consecutively.

At a second axial end, the filter elements may be sealed against the housing and/or each other. Preferably, both the first and the second filter elements are closed at the second end. In particular, the second and/or fourth end caps can be monolithically closed. Alternatively, a closing means, such as a closed end face of a support tube, can be sealingly attached to the second or fourth end cap.

Typically, the housing comprises a first housing part associated with the first end and a second housing part associated with the second end. An inlet may be formed at the first or second housing part. An outlet is preferably formed at the first housing part. The outlet may be in fluid communication with a clean side inside the inner filter element.

In a preferred embodiment of the gas filter system the first axial end cap projection of the outer filter element has a first sealing surface facing the common groove for sealing abutment, preferably in the radial direction, against the sealing projection of the housing. This can improve the sealing effect. The first sealing surface is preferably directed radially inwards.

Furthermore, an embodiment of the gas filter is preferred, in which the second axial end cap projection of the inner filter element has a second sealing surface facing the common groove for sealing abutment, preferably in the radial direction, against the sealing projection of the housing. This can further improve the sealing effect. The second sealing surface is preferably directed radially outwards.

In general, sealing surfaces described within the context of this invention are softer than the counter-part against which they shall seal. In particular, a respective sealing surface can be made from polyurethane, preferably polyurethane foam. The respective counter-part can be made from rigid plastic.

Another preferred embodiment provides that the common groove extends along an inner circumference of the first end cap and/or along an outer circumference of the third end cap. This allows a uniform sealing effect to be achieved over the entire circumference between the filter elements.

In another preferred embodiment of the gas filter system the common groove has at least one radial bulge and/or at least one radial recess with respect to a longitudinal axis of the gas filter system. Generally, the sealing projection has a corresponding radial bulge and/or recess. This enables a rotation-proof arrangement of the filter elements. Thus, defined sealing contact can be enhanced. Furthermore, the use of unsuitable filter elements is prevented.

In addition, a preferred embodiment of the gas filter is one in which the common groove has a plurality of radial bulges and radial recesses, said bulges and recesses being formed in particular in an evenly distributed manner over the circumference. The sealing projection generally replicates the corrugated shape of the common groove. This allows the filter elements to be arranged even more precisely in relation to each other. Even distribution of the bulges and/or recesses simplifies mounting of the filter system.

A preferred embodiment provides that said first end cap projection and said second end cap projection form a common web comprising the common groove. This enables the formation of a defined sealing section to be received in the housing groove.

Preferably, the common web is formed as a circular ring with constant, in particular radial, width. Likewise, the housing groove is preferably formed with constant (radial) width. A corrugated sealing projection may separate the housing groove in two sub-grooves of varying width.

The outer filter element may be closed, especially by the second end cap, on the side opposite the first end cap. The second end cap may be a monolithic closed end cap. Alternatively, a closing means may be permanently affixed to the outer filter element for sealing of the second end cap.

The inner filter element may be closed, especially by the fourth end cap, on the side opposite the third end cap. The fourth end cap may be a monolithic closed end cap. Alternatively, a closing means may be permanently affixed to the inner filter element for sealing of the fourth end cap.

The end caps can have polyurethane, in particular be made of polyurethane foam. The second and the fourth end cap may also be made of or comprise a rigid plastic. Such plastic end caps can be glued to the respective filter medium. This can further improve the sealing effect.

The first and second end cap projections can be integrally made with the first or third end cap, respectively. This further simplifies manufacturing of the filter elements. A preferred embodiment of the gas filter system provides that the first end cap and/or the third end cap is a monolithic foam part.

Preferably, the first and/or third end cap is made of a foam, preferably polyurethane foam. A foam end cap can be directly molded to the first or second filter medium, respectively. This reduces manufacturing effort. Furthermore, (polyurethane) foam has good sealing properties.

Further preferred is an embodiment of the gas filter system, in which the sealing projection is formed complementary to the common groove of the first end cap and the second end cap. In other words, the sealing projection can be designed to follow the shape of the common groove. This can favour a uniform contact of the sealing projection and further improve the sealing effect.

The housing may have a central tube, which extends into the inner filter element at the third end cap in a mounted state of the filter system. The central tube provides guidance to the inner filter element and support to the second filter medium.

It is further preferred that the housing groove is adapted to press the first and second end cap projections against the sealing projection, in particular in the radial direction. This can further improve the sealing effect.

In a preferred embodiment of the gas filter system the first or the second filter medium, in particular the second filter medium of the inner filter element, has gas-adsorbing properties and preferably contains activated carbon.

In a preferred embodiment of the gas filter the first or the second filter medium, in particular the first filter medium of the outer filter element, is made with cellulose.

Preferably, the filter element which is flown through first is embodied to filter particles and the filter element which is flown through second is embodied to adsorb harmful gases.

The first and/or the second filter medium may be pleated. The pleated media is arranged to form a circumferentially closed filter bellows that may have cylindrical or conical shape, preferably with a circular or oval cross section.

In a preferred embodiment of the gas filter system the first end cap projection has at least one stepped cross-section and the second end cap projection has at least one complementary stepped cross-section. Preferably, the first and/or the second end cap projection have a plurality of stepped cross-sections, which are arranged or formed in an evenly distributed manner, in particular over the respective circumference of the end cap projection. This allows a particularly precise arrangement of the filter elements. The axially stepped configuration allows to form regions on the end cap projections, which overlap the other end cap in the radial direction.

The invention also relates to the use of an outer filter element and/or an inner filter element in a gas filter system according to the invention, as described above.

The invention further relates to a filter element according to claim 16 and a filter element according to claim 18 for use in a gas filter system according to the invention.

A first gas filter element according to the invention has a filter medium surrounding a hollow interior and being arranged between a first end cap and a second end cap, at least the first end cap being open, wherein the first end cap has an axial end cap projection, said end cap projection being arranged on an inner circumference of the first end cap and having a radially inwards directed sealing surface. Preferably, the sealing surface of the end cap projection comprises at least one radial bulge and/or recess.

The open end cap is ring-shaped and will usually have a circular or oval cross section. The axial end cap projection will generally have the same contour. The sealing surface may comprise a plurality of radial bulges and/or recesses which may be evenly distributed over the circumference. The outer surface of the axial end cap projection is preferably circular or oval without any bulges and/or recesses. This leads to a varying width of the axial end cap projection.

Such a filter element may be used as an exchangeable outer filter element in a filter system as claimed. The sealing surface is embodied to be complementary to a corresponding surface of the sealing projection of the housing. The filter element may be embodied for filtering particles and may comprise or consist of cellulose or it may have gas adsorbing properties and can comprise activated carbon.

A further gas filter element according to the present invention has a filter medium surrounding a hollow interior and being arranged between a third end cap and a fourth end cap, at least the third end cap being open, wherein the third end cap has an axial end cap projection, said end cap projection being arranged on an outer circumference of the third end cap and having a radially outwards directed sealing surface. Preferably, the sealing surface of the axial end cap projection comprises at least one radial bulge and/or recess.

The open end cap is ring-shaped and will usually have a circular or oval cross section. The axial end cap projection will generally have the same shape. The sealing surface may comprise a plurality of radial bulges and/or recesses which may be evenly distributed over the circumference. The radial inner surface of the axial end cap projection is preferably circular or oval without any bulges and/or recesses. This leads to a varying width of the axial end cap projection.

Such a filter element may be used as an exchangeable inner filter element in a filter system as claimed. The sealing surface is embodied to be complementary to a corresponding surface of the sealing projection of the housing. The filter element may have gas adsorbing properties and can comprise activated carbon or it may be embodied for filtering particles and may comprise or consist of cellulose.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a gas filter system according to the invention, the gas filter system comprising an outer filter element, an inner filter element and a housing, in a schematic sectional view.
- Fig. 2: shows a first end of the filter system of Fig. 1 in a first enlarged sectional view.
- Fig. 3: shows the gas filter system of Fig. 1, in a sectional top view.
- Fig. 4: shows the first end of the filter system of Fig. 1 in a second enlarged sectional view.
- Fig. 5: shows the outer filter element of the gas filter system of Fig. 1, in a schematic perspective view.
- Fig. 6: shows the inner filter element of the gas filter system of Fig. 1, in a schematic perspective view.

### Detailed description

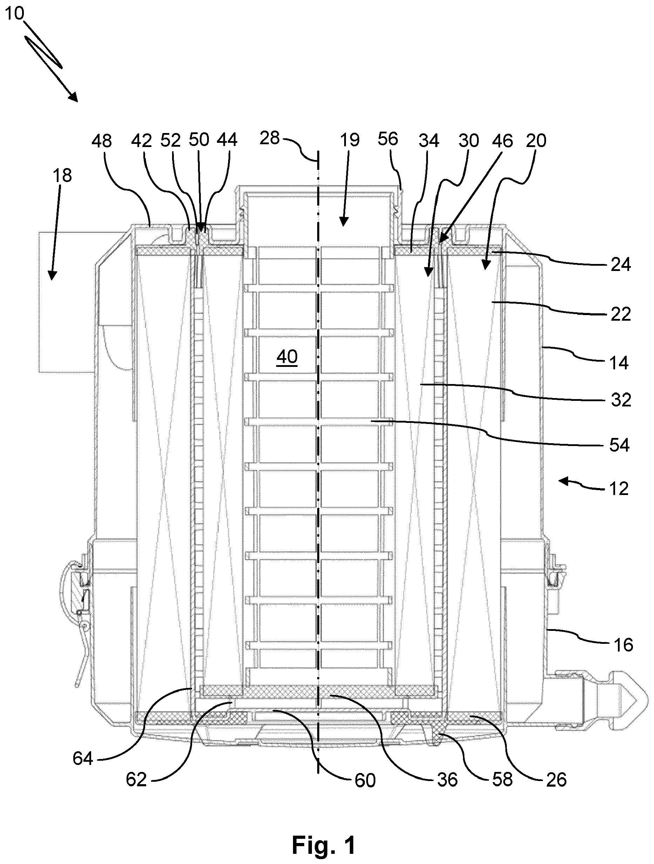

**Figure 1** shows a gas filter system **10**. The filter system 10 comprises a housing **12**. The housing has a first housing part **14** and a second housing part **16,** which are attachable to each other. An inlet **18** allows gas to enter the housing 12. Here, the inlet is formed at the first housing part 14. An outlet **19** for filtered gas is also formed at the first housing part 14. The housing parts 14, 16 can be made from metal and/or rigid plastic.

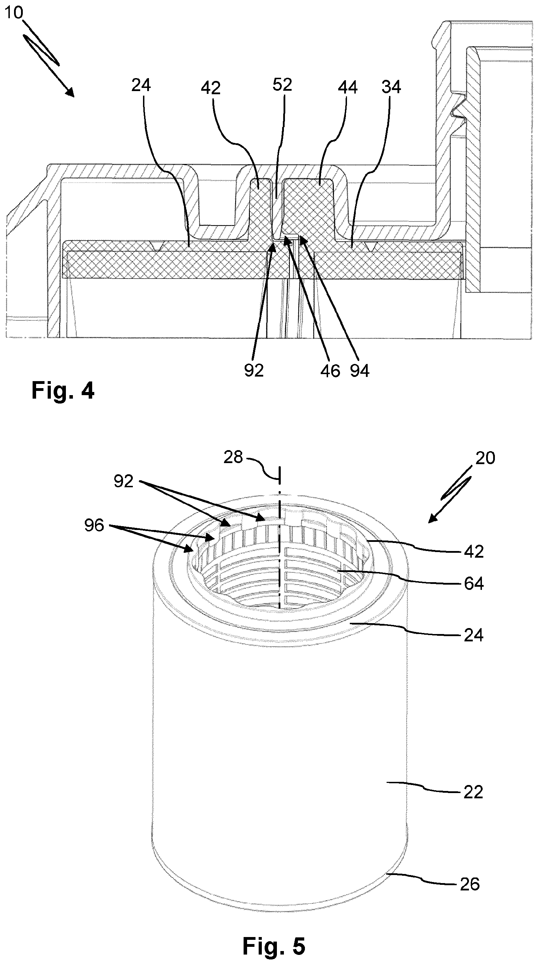

The filter system 10 further comprises an outer filter element **20,** see also **Figure 5****.** The outer filter element 20 comprises a first filter medium **22**. The first medium 22 is contained between a first end cap **24** and a second end cap **26**. The first filter medium 22 surrounds a longitudinal axis **28** in a ciruclar manner. The first filter medium 22 can be made from pleated cellulose paper.

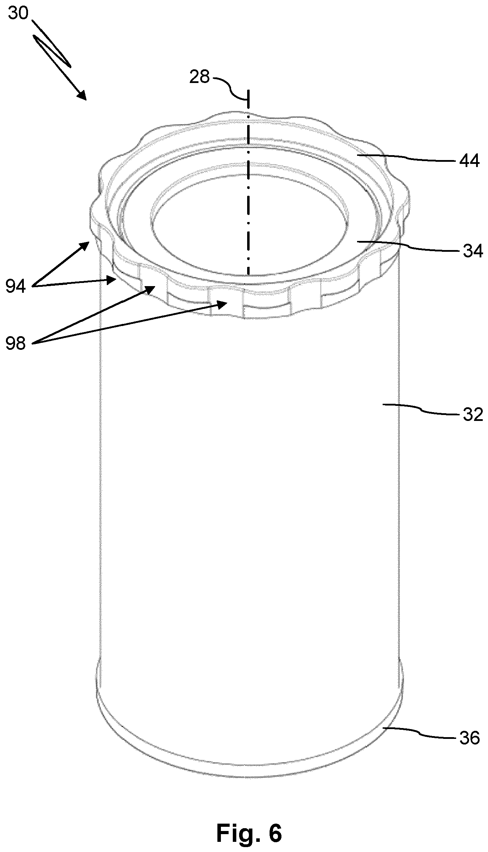

The filter system 10 further comprises an inner filter element **30,** see also **Figure 6****.** The inner filter element 30 comprises a second filter medium **32**. The second medium 32 is contained between a third end cap **34** and a fourth end cap **36**. The second filter medium 32 also surrounds the longitudinal axis 28 in a ciruclar manner. The second filter medium 32 can contain activated carbon in order to achieve gas-adsorbing properties.

The inner filter element 30 is arranged inside the outer filter element 20. Both filter elements 20, 30 are arranged inside the housing 12. Here, the first and second filter media 22, 32 are concentric to one another and to the longitudinal axis 28.

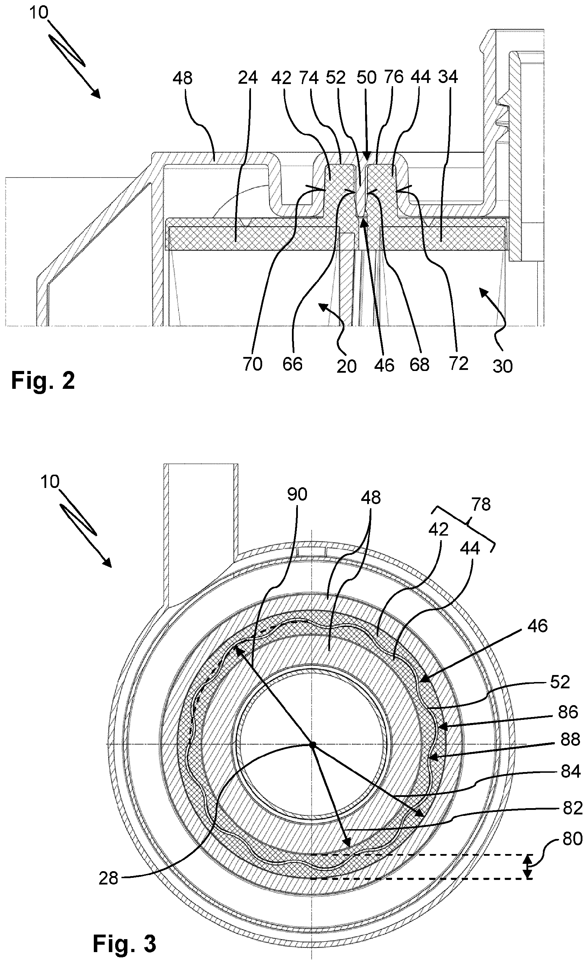

At a first end of the filter system 10, the first end cap 24 is arranged to surround the third end cap 34, see also **Figure 2****.** The first end cap 24 and the third end cap 34 each have a central opening, see also Figures 4 and 5, respectively. The outlet 19 is in fluid communication with a clean side **40** within the inner filter element 30, cf. Figure 1.

The first end cap 24 of the outer filterelement 20 has a first axial end cap projection **42.** In other words, the first end cap projection 42 projects beyond the first filter medium 22 in axial direction with respect to the longitudinal axis 28. The first end cap projection 42 may extend parallel to the longitudinal axis 28. Preferably, the first end cap projection 42 is arranged, in particular formed, on a side of the first end cap 24 facing away from the first filter medium 22.

The third end cap 34 of the inner filter element 30 has a second axial end cap projection **44.** The second end cap projection 44 can be arranged, in particular formed, analogously to the first end cap projection 42.

As shown, the first axial end cap projection 42 and the second axial end cap projection form a common groove **46.** According to the depicted embodiment, the common groove 46 is open at the bottom. In other words, the two end caps 24, 34 are arranged radially separated from each other, i.e. they do not touch each other at the first and third end caps 24, 34.

The housing 12 - here the first housing part 14 - has a housing end face **48.** The housing end face 48 can be aligned in the normal direction to the longitudinal axis 28. The housing end face 48 forms a housing groove **50.** The first axial end cap projection 42 and the second axial end cap projection 44 are arranged in the housing groove 50, especially for sealing abutment. In other words, the housing groove 50 can embrace the end cap projections 42, 44.

A sealing projection **52** is arranged, in particular formed, within the housing groove 50. The sealing projection 52 separates two sub-grooves within the housing groove. The first and second sealing projections 42, 44 are each accommodated in one of the sub-grooves of the housing groove.

The sealing projection 52 protrudes into the common groove 46 of the first and second end cap projections 42, 44 for sealing engagement with the first and third end caps 24, 34. The sealing projection 52 may protrude from the housing groove 50.

The first end cap 24 and the third end cap 34 are sealed against each other and the housing 12 by means of the sealing projection 52. Radial sealing can be established in this way.

In the depicted embodiment, the first end cap 24 with the first end cap projection 42 as well as the third end cap 34 with the second end cap projection 46 are integrally made from polyurethane foam. In other words, the end caps 24, 34 with their respective end cap projections 42, 44 are monolitic parts. The second and fourth end caps 26, 36 can also comprise polyurethane foam, in particular consist of it.

A central tube **54** of the housing 12 is held at an axial collar **56** of the first housing part 14. The collar 56 may comprise the outlet 19. The collar 56 may project axially beyond the housing end face 48. The central tube 54 extends through the opening of the third end cap 34 towards the fourth end cap 36. The central tube 54 can be made from rigid plastic.

At a second end of the filter system 10, the second end cap 26 and the fourth end cap 36 are arranged. The second end cap 26 can have a central opening, which is preferably closed by a closing means. The fourth end cap 36 is closed. In the depicted embodiment, the fourth end cap 36 is a monolitic closed end cap.

The second end cap 26 can comprise a housing spacer **58** that bears against the housing 12 - in this case the second housing part 16. The housing spacer 58 may provide an axial distance between the second end cap 26 and a bottom face of the housing 12. Preferably, the housing spacer 58 is formed integrally with the second end cap 26.

The second end cap 26 and/or the fourth end cap 36 can be integrally made from polyurethane foam. In other words, the second end cap 26 and/or the fourth end cap 36 may be monolitic parts. They may be molded to the first or second filter medium 22, 32, respectively.

The outer filter element 20 may have a bottom plate **60** that closes the outer filter 20 in the axial direction. The bottom plate 60 is preferably made of rigid plastic or metal. Preferably, the bottom plate 60 is embedded in the second end cap 26.

The outer filter element 20 may comprise at least one filter spacer **62** separating the inner filter element 30 from the outer filter element 20. The filter spacer 62 is preferably monolythically formed on the bottom plate 60.

The outer filter element 20 may have a support tube **64** arranged raidally on the inside of the first filter medium 22. This allows the first filter medium 22 to be radially supported. The support tube 64 can be formed in one piece with the bottom plate 60.

Referring now to Fig. 2, a first end of the filter system of Fig. 1 is shown in a first enlarged sectional view.

Said first end of the filter system 10 shows the outer filter element 20 surrounding the inner filter element 30. The end cap projections 42, 44 of the respective end caps 20, 30 are arranged in the housing groove 50.

As shown, the sealing projection 52 extends into the common groove 46 formed between the end cap projections 42, 44. The sealing projection 52 may sealingly abut a first sealing surface **66** of the first end cap projection 42 facing the common groove 46 and a second sealing surface **68** of the second end cap projection 44 facing the common groove 46.

According to the embodiment shown, the sealing projection 52 may be configured to widen the common groove 46 when the sealing projection 52 is disposed in the common groove 46. In addition to the sealing contact of the sealing projection 52 against the end cap projections 42, 44, a radial pressing of the first end cap projection 42 and/or second end cap projection 44 against an outer or inner wall of the housing groove 50, respectively, can thus be effected. In other words, a third sealing surface **70** can be formed radially outwardly on the first end cap projection 42 and/or a fourth sealing surface **72** can be formed radially inwardly on the second sealing projection 44. In alternative words, the housing groove 50 may be adapted to press the first and second end cap projection 42, 44 against the sealing projection 52, especially in the radial direction. This can further increase the sealing effect.

In addition, the housing 12 may be configured to sealingly engage a fifth sealing 74 surface of the first end cap projection 42 and/or a sixth sealing surface **76** of the second end cap projection 44. Preferably, placing the first housing part 14 against the second housing part 16 results in a slight compression of the first and/or second filter element 20, 30, allowing the sealing projections 42, 44 to be firmly received in the housing groove 50 (cf. Fig. 1).

**Figure** 3 shows the gas filter system 10 from the previous figures in a sectional view with a sectional plane oriented perpendicular to the longitudinal axis and running through the end cap projections 42, 44 and the sealing projection 52. According to the invention, the sealing projection 52 is arranged in the common groove 46.

According to the embodiment, the first end cap projection 42 and the second end cap projection 44 are formed circumferentially closed. The two end cap projections 42, 44 form a common web 78. The common web 78 can be circumferentially closed as shown. Preferably, as shown, the common web 78 is formed as a circular ring, in particular with a constant radial width **80** between an inner diameter **82** and an outer diameter 84. The inner diameter 82 and/or the outer diameter 84 preferably refers to the longitudinal axis 28 of the gas filter system 10.

As shown, the common groove 46 may be circumferentially closed. Preferably, the common groove 46 is formed circumferentially by the first end cap projection 42 and the second end cap projection 44. The common groove 46 may have at least one radial bulge **86** or radial recess 88. Preferably, as shown, the common groove 46 has several radial bulges 86 and several radial recesses 88 which are formed in particular in an evenly distributed manner over the circumference. In other words, the common groove 46 can be designed to oscillate around a median radius 90. This enables a torsion-resistant arrangement of the filter elements 20, 30 relative to each other as well as in the housing 12, whereby a well sealing arrangement can be obtained.

The sealing projection 52 may be formed complementary to the common groove 46 of the first end cap projection 42 and the second end cap projection 44. In other words, the sealing projection 52 follows the corrugated shape of the common groove 46.

Referring now to **Figure 4****,** the first end of the filter system 10 of Figs. 1 and 2 is shown in a second enlarged sectional view through a radial bulge 86.

According to the illustration, the first end cap projection 42 and/or the second end cap projection 44 may have a stepped cross-section **92, 94** in the axial direction, see also Figures 5 and 6. The stepped cross-section 92 of the first end cap projection 42 may be radially recessed from the first end cap 24 as shown. The stepped cross-section 94 of the second end cap projection 44 can be radially protruding relative to the third end cap 34 in a complementary manner. Preferably, the radially protruding stepped cross-section 94 overlaps the radially recessed stepped cross-section 92. This allows the end caps 24, 34 to be arranged at a particularly close distance from each other.

Figure 5 shows the outer filter element 20 of the gas filter system 10 of Figure 1, in a schematic perspective view. The outer filter element 20 comprises the support tube 64, which is hollow cylindrical as shown.

According to the embodiment shown, the outer filter element 20 has a plurality of stepped cross-sections 92 at the first end cap protrusion 42. The stepped cross-sections 92 are here radially recessed and evenly distributed around an inner perimeter of the first end cap 24 with the end cap projection 42.

As shown, the first end cap protrusion 42 may have stepless cross-sections 96. The stepless cross-sections 96 may be formed alternately with the stepped cross-sections 92.

Figure 6 shows the inner filter element 30 of the gas filter system 10 of Figure 1, in a schematic perspective view.

According to the embodiment shown, the outer filter element 30 has a plurality of stepped cross-sections 94 at the second end cap protrusion 44. The stepped cross-sections 94 are here radially protruding and evenly distributed around an outer perimeter of the third end cap 34 with the second end cap projection 44.

As shown, the second end cap projection 44 may have stepless cross-sections 98. The stepless cross-sections 98 may be formed alternately with the stepped cross-sections 94.

The stepped cross-sections 92, 94 and/or the non-stepped cross-sections 96, 98 are preferably each formed in pairs complementary to each other. When the outer filter element 20 is arranged to surround the inner filter element 30, the stepped cross-sections 92, 94 and/or the non-stepped cross-sections 96, 98 are preferably in engagement with each other.

In summary, the invention thus relates to a gas filter system (10) comprising
- a housing (12) with a sealing projection (52) in a housing groove (50);
- an outer filter element (20) having a first filter medium (22) and a first end cap (24); and
- an inner filter element (30) having a second filter medium (32) and a third end cap (34);
wherein the first end cap (24) has a first axial end cap projection (42) and the third end cap (34) has a second axial end cap projection (44), both end cap projections (42, 44) being arranged in the housing groove (50);
said first and second end cap projections (42, 44) forming a common groove (46) into which the sealing projection (52) protrudes for sealing abutment against the first and third end cap (24, 34) at the common groove (46). The invention also relates to the use of an outer filter element (20) and/or an inner filter element (30) in such a gas filter system (10).

### List of reference signs

gas filter system **10**;
housing **12**;
first housing part **14**;
second housing part **16**;
inlet **18**;
outlet **19**;
outer filter element **20**;
first filter medium **22**;
first end cap **24**;
second end cap **26**;
longitudinal axis **28**;
inner filter element **30**;
second filter medium **32**;
third end cap **34**;
fourth end cap **36**;
clean side **40**;
first end cap projection **42**;
second end cap projection **44**;
common groove **46**;
housing end face **48**;
housing groove **50**;
sealing projection **52**;
central tube **54**;
axial collar 56;
housing spacer 58;
bottom plate 60;
filter spacer 62;
support tube **64**;
first sealing surface **66**;
second sealing surface **68**;
third sealing surface **70**;
fourth sealing surface **72**;
fifth sealing surface **74**;
sixth sealing surface **76**;
common web **78**;
width **80**;
inner diameter **82**;
outer diameter **84**;
radial bulge **86**;
radial recess **88**;
median radius **90**;
stepped cross-section **92**;
stepped cross-section **94**;
stepless cross-section **96**;
stepless cross-section **98**.

## Claims

1. Gas filter system (10) comprising
- a housing (12) with a sealing projection (52) and a housing groove (50), the sealing projection (52) being arranged within said housing groove (50);
- an outer filter element (20) having a first filter medium (22) arranged between a first end cap (24) and a second end cap (26); and
- an inner filter element (30) having a second filter medium (32) arranged between a third end cap (34) and a fourth end cap (36);
the first and third end caps (24, 34) being open;
the first filter medium (22) being arrangeable to surround the second filter medium (32), such that the first end cap (24) of the outer filter element (20) surrounds the third end cap (34) of the inner filter element (30);
wherein the first end cap (24) has a first axial end cap projection (42) and the third end cap (34) has a second axial end cap projection (44) arranged in the housing groove (50);
said first and second end cap projections (42, 44) forming a common groove (46) into which the sealing projection (52) protrudes for sealing abutment against the first and third end cap (24, 34) at the common groove (46).

2. Gas filter system (10) according to claim 1, wherein the first axial end cap projection (42) of the outer filter element (20) has a first sealing surface (66) facing the common groove (46) for sealing abutment, preferably in the radial direction, against the sealing projection (52) of the housing (12).

3. Gas filter system (10) according to claim 1 or 2, wherein the second axial end cap projection (44) of the inner filter element (30) has a second sealing surface (68) facing the common groove (46) for sealing abutment, preferably in the radial direction, against the sealing projection (52) of the housing (12).

4. Gas filter system (10) according to any of the preceding claims, wherein the common groove (46) extends along an inner circumference of the first end cap (24) and/or along an outer circumference of the third end cap (34).

5. Gas filter system (10) according to any of the preceding claims, wherein the common groove (46) has at least one radial bulge (86) and/or at least one radial recess (88) with respect to a longitudinal axis (28) of the gas filter system (10).

6. Gas filter system (10) according to claim 5, wherein the common groove (46) has a plurality of radial bulges (86) and radial recesses (88), said bulges (86) and recesses (88) being formed in particular in an evenly distributed manner over the circumference.

7. Gas filter system (10) according to any of the preceding claims, wherein the said first end cap projection (42) and said second end cap projection (44) form a common web (78) comprising the common groove (46).

8. Gas filter system (10) according to claim 7, wherein the common web (78) is formed as a circular or oval ring with constant width (80).

9. Gas filter system (10) according to any of the preceding claims, wherein the first end cap (24) and/or the third end cap (34) is a monolithic foam part.

10. Gas filter system (10) according to any of the preceding claims, wherein the sealing projection (52) is formed complementary to the common groove (46) of the first end cap projection (42) and the second end cap projection (44).

11. Gas filter system (10) according to any of the preceding claims, wherein the housing groove (50) is adapted to press the first and second end cap projection (42, 44) against the sealing projection (52).

12. Gas filter system (10) according to any one of the preceding claims, wherein the first or the second filter medium (22, 32), in particular the second filter medium (32) of the inner filter element (30), has gas-adsorbing properties and preferably contains activated carbon.

13. Gas filter system (10) according to one of the preceding claims, wherein the first or the second filter medium (22, 32), in particular the first filter medium (22) of the outer filter element (20), is made with cellulose.

14. Gas filter system (10) according to one of the preceding claims, wherein the first end cap projection (42) has at least one stepped cross-section (92) and the second end cap projection (44) has at least one complementary stepped cross-section (94).

15. Use of an outer filter element (20) and/or an inner filter element (30) in a gas filter system (10) according to one of the preceding claims.

16. Gas filter element (20) having a filter medium (22) surrounding a hollow interior and being arranged between a first end cap (24) and a second end cap (26), at least the first end cap (24) being open, wherein the first end cap (24) has an axial end cap projection (42), said end cap projection (42) being arranged on an inner circumference of the first end cap (24) and having a radially inwards directed sealing surface (66).

17. Gas filter element (20) according to claim 16, wherein the sealing surface (66) of the end cap projection (42) comprises at least one radial bulge (86) and/or recess (88).

18. Gas filter element (30) having a filter medium (32) surrounding a hollow interior and being arranged between a third end cap (34) and a fourth end cap (36), at least the third end cap (34) being open, wherein the third end cap (34) has an axial end cap projection (44), said end cap projection (44) being arranged on an outer circumference of the third end cap (34) and having a radially outwards directed sealing surface (68).

19. Gas filter element (20) according to claim 18, wherein the sealing surface (68) of the axial end cap projection (44) comprises at least one radial bulge (86) and/or recess (88).
